# EUROPÄISCHE PATENTSCHRIFT

(11) **EP 2 261 067 B1**
(45) Veröffentlichungstag und Bekanntmachung des Hinweises auf die Patenterteilung: **28.11.2012**
(21) Anmeldenummer: 10163514.2
(22) Anmeldetag: 21.05.2010
(51) Int. Cl.: B60H 1/00, B60H 1/34, F24F 13/02, F24F 13/06

(54) **Luftausströmvorrichtung**
Air duct device
Dispositif d'écoulement d'air

(30) Priorität: 26.05.2009 DE 102009022740
(43) Veröffentlichungstag der Anmeldung: 15.12.2010
(73) Patentinhaber: Behr GmbH & Co. KG, 70469 Stuttgart (DE)
(72) Erfinder: D'Angelo, Marco, 70469 Stuttgart (DE); Venezia, Vincenzo, 71093 Weil im Schönbuch (DE); Wanke, Holger, 74385 Pleidelsheim (DE)
(74) Vertreter: Grauel, Andreas

(56) Entgegenhaltungen:
- WO-A1-2005/110785
- DE-A1-102006 014 683
- DE-A1-102007 001 986
- DE-A1-102008 016 238

## Beschreibung

Die Erfindung betrifft eine Luftausströmvorrichtung für Belüftungsvorrichtungen, insbesondere für Belüftungsvorrichtungen von Kraftfahrzeugen. Insbesondere betrifft die Erfindung Luftausströmerdüsen für Belüftungsvorrichtungen, insbesondere für Belüftungsvorrichtungen von Kraftfahrzeugen. Weiterhin betrifft die Erfindung eine Luftaufbereitungsvorrichtung, insbesondere eine Luftarbeitungsvorrichtung für Kraftfahrzeuge sowie eine Luftführungsvorrichtung, insbesondere eine Luftführungsvorrichtung für Kraftfahrzeuge.

Im Zusammenhang mit luftaufbereitenden Einrichtungen, wie beispielsweise Belüftungssystemen, Heizungssystemen und für Gebäude oder Fahrzeuge ist es erforderlich, dass die je nach Anlage unterschiedlich aufbereitete Luft in den betreffenden abgegeben wird. Dabei sind je nach Anwendungssituation unterschiedliche Arten der Luftabgabe erwünscht. Auch ist es möglich, dass bei einem bestimmten Einsatzgebiet, wie beispielsweise bei Kraftfahrzeugen, gleichzeitig an unterschiedlichen Orten unterschiedliche Arten der Luftabgabe erwünscht sind. Auch kommt es vor, dass zu untersehiedfichen Zeitpunkten - beispielsweise in Abhängigkeit von der Wettersituation - unterschiedliche Arten der Luftabgabe erwünscht sind,

Im Kraftfahrzeugbereich werden dafür - je nach Einbauort und in Abhängigkeit von den zu realisierenden Komforansprüchen - unterschiedliche Arten von Luftausströmerdüsen verwendet. So werden beispielsweise bei Luftausströmerdüsen, welche die Luft in den Fußraum oder in Richtung der Windschutzscheibe eines Kraftfahrzeugs hin ausströmen, heutzutage üblicherweise Luftausströmerdüsen verwendet, welche eine diffuse Luftausströmungscharakteristik aufweisen. Demgegenüber werden im Bereich des Armaturenbretts häufig Lnftäusströmerdüsen verwendet, welche einen gerichteten Luftstrahl abgeben (sogenannte Spot-Luftausströmerdüsen). Mit steigenden Komfortansprüchen kam jedoch der Wunsch auf, dass auch bei Luftausströmerdüsen Im Bereich des Armaturenbretts zumindest zeitweise eine diffuse Luftausströmungscharaktenstik möglich sein soll, ohne dass hierbei die Möglichkeit eines gerichteten Luftstrahls entfallen soll. Um beide möglichen Luftausströrnungsmodi zu realisieren, wurden daher Kombinations-Luftausströmerdüsen vorgeschlagen, welche in einer ersten Einstellung einen gerichteten Luftstrahl abgeben, in einer zweiten Einstellung dagegen den Luftstrahl diffus abgeben. Je nach Aufbau der Kombinations-Luftausströmerdüsen ist es auch möglich, dass ein gerichteter und ein diffuser Luftstrahl gleichzeitig abgegeben wird. Die WO 2005/110785 A1 zeigt eine Vorrichtung gemäß Oberbegriff des Anspruchs 1.

Obwohl die im Stand der Technik bekannten Luftausströmerdusen insbesondere die im Stand der Technik bekannten Kombinations-Luftausströmerdüsen ihre Aufgaben grundsätzlich erfüllen, so weisen diese nach wie vor Nachteile auf. Beispielsweise ist der Druckverlust bei Kombinations-Luftausströmerdüsen insbesondere im Spot-Modus und im Spot-Diffus-Modus unerwünscht hoch. Dies vermindert den möglichen Luftdurchsatz, bzw. erfordert einen stärkeren Luftermotor. Auch die Akustik von bekannten Luftausströmerdüsen, insbesondere von bekannten Kombinations-Luftausströmerdüsen weist zu wünschen übrig. Auch hier sind die Nachteile üblicherweise in Spot-Modus und im Spot-Diffus-Modus besonders ausgeprägt.

Die Aufgabe der Erfindung besteht daher darin, Luftausströmvorrichtungen vorzuschlagen, welche gegenüber bekannten Luftausströmvorrichtungen verbessert sind.

Dazu wird vorgeschlagen eine Luftausströmvorrichtung für Belüftungsvorrichtungen, insbesondere für Belüftungsvorrichtungen von Kraftfahrzeugen, speziell Luftausströmerdüsen für Belüftungsvorrichtungen, insbesondere für Belüftungsvorrichtungen von Kraftfahrzeugen derart auszubilden, dass die Luftausströmvorrichtung zumindest abschnittsweise zumindest zwei voneinander getrennte Luftführungskanäle aufweist, wobei sich der Luftdurchgangsquerschnitt zumindest eines der Luftführungskanäle verändert. Dabei ist es grundsätzlich möglich, dass sich die Veränderung des Luftdurchgangsquerschnitts auf einen mittleren Bereich (zwischen einer Eingangsöffnung und einer Ausgangsöffnung des betreffenden Luftführungskanals) bezieht und/oder dass die Luftdurchgangsquerschnitte des bzw. der Lufteinlässe und der Luftdurchgangsquerschnitt des oder der Luftauslässe des betreffenden Luftführungskanals unterschiedlich groß gewählt sind. Die Änderung des Luftdurchgangsquerschnitts kann dabei lediglich , zwei, eine Mehrzahl und/oder alle vorhandenen Luftführungskanäle betreffen. Durch die vorgeschlagene Maßnahme ist es auf verblüffend einfache Weise möglich, dass beispielsweise die Lufteintrittsöffnung und/oder die Luftaustrittsöffnung des betreffenden Luftführungskanals der Luftausströmvorrichtung auf den jeweiligen Zweck bzw. die jeweiligen Erfordernisse hin optimiert werden kann. Beispielsweise kann der Luftauslass eines Spot-Luftführungskanals besonders klein gewählt werden (was zu einer starken gerichteten Luftausströmungscharakteristik führt, wohingegen die Lufteintrittsöffnung eines Spot-Luftführungskanals im Verhältnis dazu relativ groß gewählt werden kann (was zu einem verringerten Lufteintrittswiderstand in dem betreffenden Luftführungskanal führen kann). Grundsätzlich ist die Größe der relativen Änderung des Luftdurchgangsquerschnitts beliebig. Besonders günstige Zahlenwerte haben sich jedoch bei relativen Größenänderungen mit Werten ergeben, welche in einem Intervall mit der unteren Grenze 0,3, 0,4, 0,5, 0,6, 0,7, 0,8 oder 0,9 und mit der oberen Grenze 0,5, 0,6, 0,7, 0,8, 0,9 oder 0,95 liegen. Die genannten Zahlenwerte können sich insbesondere auf das Verhältnis des Luftdurchgangsquerschnitts an einer Eintrittsöffnung im Verhältnis zu einer Austrittsöffnung beziehen.

Erfindungsgemäß ist es , wenn sich der Luftdurchgangsquerschnitt zumindest eines der Luftführungskanäle vergrößert und sich der Luftdurchgangsguerschnitt zumindest eines der Luftführungskanäle verkleinert. Dabei können die Vergrößerung und die Verkleinerung korrespondierend aufeinander angepasst werden, Dadurch ist es beispielsweise möglich, die Vergrößerung bzw, die Verkleinerung des Luftdurchgangsguerschnitts durch eine einfache Trennwand zwischen den beiden Luftführungskanälen zu realisieren.

Erfindungsgemäß ist die Luftausströmungsvorrichtung derart ausgebildet , dass der Gesamtluftdurchgangsquerschnitt der Luftausströmvorrichtung und/oder der Außenquerschnitt der Luftausströmvorrichtung im Wesentlichen gleich ist, Dadurch lassen sich einerseits technische Vorteile realisieren (wie beilspielsweise die Belastung eines Lüfters), andererseits kann der vorhandene Bauraum optimal ausgenutzt werden und die Lagerung der Luftausströmvorrichtung kann besonders einfach gehalten werden.

Sinnvoll ist es, wenn zumindest Teile der Luftführungskanäle zumindest bereichsweise koaxial ausgebildet und/oder angeordnet sind. Bei einer derartigen Anordnung wird die resultierende Luftausströmcharakteristik in der Regel als besonders angenehm empfunden.

Vorteilhaft ist es insbesondere, wenn zumindest Teile der Luftführungskanäle zumindest bereichsweise kreisartig, kreisringartig, kreissegmentarting und/oder kreisringsegmentarting ausgebildet sind, Die vorgeschlagene Ausbildung ist insbesondere besonders unempfindlich gegenüber einem in der Praxis oftmals schwer zu vermeidenden Verdrehen längs der Axialrichtung. Auch hier wird die Gesamtluftausströmcharakteristik in der Regel als besonders angenehm empfunde.

Sinnvoll ist es insbesondere, wenn zumindest einer der Luftführungskanäle mit einer diffus wirkenden Luftabgabeöffnung verbunden ist und/oder zumindest einer der Luftführungskanäle mit einer gerichteten Luftabgabeöffnung (Spot-Öffnung) verbunden ist. Gerade im Kraftfahrzeugbereich werden derartige Düsen nachgefragt, speziell bei im Bereich des Armaturenbretts anzuordnenden Luftausströmerdüsen.

Eine besonders vorteilhafte Ausbildungsform ergibt sich, wenn zumindest ein Luftführungskanal, der mit einer diffus wirkenden Luftabgabeöffnung verbunden ist, zumindest bereichsweise in einem äußeren Bereich der Luftausströmvorrichtung angeordnet ist und/oder mit einem sich vergrößernden Luftdurchtrittsquerschnitt ausgebildet ist. Durch die Strömungsquerschittserweiterung kann die diffuse Luftabgabecharakteristik unterstützt bzw. realisiert werden. Selbstverständlich können noch zusätzliche Vorrichtungen, welche eine diffuse Luftausströmungscharakteristik realisierem, verwendet werden, wie beispielsweise Luftleitelemente, Diffusoren und ähnliche Vorrichtungen.

Weiterhin ist es sinnvoll, wenn zumindest ein Luftführungskanal, der mit einer gerichteten Luftahgabeöffnung verbunden ist, zumindest bereichsweise in einem inneren Bereich der Luftausströmvorrichtung angeordnet ist und/oder mit einem sich verjüngenden Luftdurchtrittsquerschnitt ausgebildet ist. Auch hier bewirkt die vorgeschlagene Ausbildung in der Regel eine Unterstützung bei der Erzeugung eines gerichteten Luftstroms. Darüber hinaus bewirkt der vorgeschlagene Aufbau, dass der Druckverlust beim Eintritt in den Spot-Luftführungskanal im Verhältnis zu bekannten Luftausströmvorrichtungen in der Regel verkleinert werden kann.

Eine weitere sinnvolle Ausbildungsform ergibt sich, wenn zumindest Teile der Luftführungskanäle zumindest bereichsweise verstellt werden können, insbesondere geöffnet, geschlossen und/oder hinsichtlich ihrer Ausströmungscharakteristik verändert werden können. Auf diese Weise lässt sich die Luftausströmvorrichtung auf einfache Weise auf unterschiedlichste Verhältnisse und/oder Benutzer einstellen.

Weiterhin wird vorgeschlagen, eine Luftaufbereitungsvorrichtung, insbesondere eine Luftaufbereitungsvorrichtung für Kraftfahrzeuge mit einer Luftausströmvorrichtung mit dem oben vorgeschlagenen Aufbau auszubilden. Bei der Luftaufbereitungsvomchtung kann es sich insbesondere um eine Heizungsanlage, eine Klimaanlage und eine Filtervorrichtung handeln. Auch eine Kombination zweier oder mehrerer Vorrichtungen ist möglich. Die Luftaufbereitungsvorrichtung weist dann die bereits im Zusammenhang mit der Luftausströmvorrichtung genannten Vorteile in analoger Weise auf.

Ebenso wird vorgeschlagen eine Luftführungsvorrichtung insbesondere eine Luftführungsvorrichtung für Kraftfahrzeuge mit zumindest einer Luftausströmungsvorrichtung mit dem oben genannten Aufbau zu versehen- Auch hier ergeben sich die bereits genannten Vorteile und Eigenschaften In analoger Weise, Bei einer Luftführungsvorrichtung kann es sich insbesondere um Luftführungskanäle handeln. Diese können als separates Bauteil, oder integral mit anderen Bauteilen, wie insbesondere tragenden Strukturbauteilen des Kraftfahrzeugs ausgebildet sein.

Im Folgenden wird die Erfindung anhand vorteilhafter Ausführungsbeispiele und unter Bezugnahme auf die beigefügte Zeichnung näher erläutert. Es zeigen:
- Fig. 1:: ein erstes Ausführungsbeispiel einer Luftausströmerdüse in schematischer Draufsicht von vorne;
- Fig. 2:: das in Fig. 1 gezeigte Ausführungsbeispiel einer Luftausströ- merdüse in einem schematischen Querschnitt;
- Fig. 3:: ein zweites Ausführungsbeispiel einer Luftausströmerdüse in schematischer Draufsicht von vorne;
- Fig. 4:: das in Fig. 3 gezeigte Ausführungsbeispiel einer Luftausströ- merdüse in emem schematischen Querschnitt.

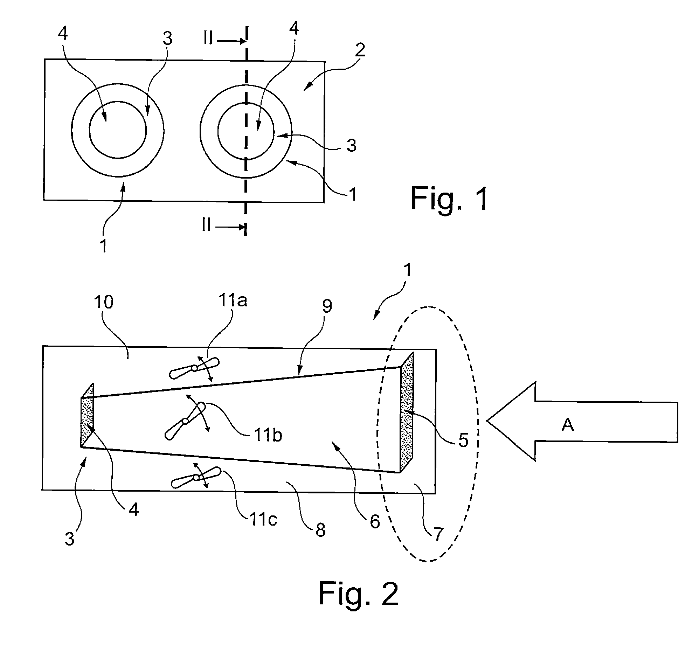

In Fig. 1 ist ein erstes mögliches Ausführungsbeispiel einer Luftausströmerdüse 1 in einer schematischen Draufsicht dargestellt. Dabei ist in Fig. 1 eine Luftausströmerdüsenanordnung 2 mit vorliegend zwei einzelnen, unabhängig voneinander verstellbaren Luftausströmerdüsen 1 dargestellt, Die Luftausströmerdüsenanordnung 2 kann beispielsweise in das Cockpitmodul eines Kraftfahrzeugs integriert werden, und zur Belüftung des Kopfbereichs der Frontpassagiere dienen. Insbesondere für derartige Luftausströmerdüsen 1 ist in aller Regel die Möglichkeit eines Spot-Betrebs der Luftausströmerdüsen 1 erwünscht, bei denen die Luftausströmerdüsen 1 einen gerichteten Luftstrahl abgeben können, und so die Passagiere "anblasen" können. In zunehmendem Maße ist es jedoch auch erwünscht dass die Luftausströmerdüsen 1 auch im Bereich des Cockpitmoduls zusätzlich eine diffuse Luftausströmcharaktestik aufweisen können.

Um in Abhängigkeit von den jeweiligen Einsatzbedingungen sowie in Abhängigkeit der Fahrgastwünsche eine gerichtete und/oder eine diffuse Luftabgabe realisieren zu können, weisen die in Fig. 1 dargestellten Luftausströmerdüsen 1 jeweils eine Diffus-Luftabgabeöffnung 3 sowie eine Spot-Luftabgabeöffnung 4 auf. Wie man Fig. 1 entnehmen kann, weist die Spot-Luftabgabeöffnung 4 einen kreisrunden Querschnitt auf. Die Diffus-Luftabgabeöffnung 3 weist einen kreisringförmigen Luftabgabequerschnitt auf. Spot-Luftabgabeöffnung 4 und Diffus-Luftabgabeöffnung 3 sind koaxial zueinander angeordnet. Der Luftdurchgangsquerschnitt der Spot-Luftabgabeöffnung 4 sowie der Diffus-Luftabgabeöffnung 3 ist ausgangsseitig annähernd gleich groß. Die Radien der beiden Luftabgabeöffnungen 3, 4 weisen aufgrund der quadratischen Beziehungen eine dazu korrespondierende Abhängigkeit auf.

Damit die Spot-Luftabgabeöffnung 4 einen ausreichend starken, gerichteten Luftstrahl erzeugen kann, muss diese einen entsprechend hohen Luftdurchsatz aufweisen. Bei bekannten Luftausströmerdüsen ist es dazu erforderlich, an der Eingangsöffnung der Luftausströmerdüse einen relativ hohen Luftdruck zur Verfügung zu stellen. Hierzu sind relativ hohe Gebläseleistungen erforderlich, was entsprechend unerwünscht ist. Darüber hinaus führt ein derartig hoher Eingangsdruck in der Regel auch zu einer unerwünschten Geräuschentwicklung.

Bei dem vorliegend beschriebenen Ausführungsbeispiel einer Luftausströmerdüse 1 wird die Erzeugung eines gerichteten Luftstrahls (Spot-Luftstrahl) durch konstruktive Maßnahmen der Luftausströmerdüse 1 unterstützt. Dies wird insbesondere in Fig. 2 deutlich, die einen Querschnitt durch eine Luftausströmerdüse 1 zeigt. So weist die Spot-Lufteingangsöffnung 5 gegenüber der Spot-Luftabgabeöffnung 4 einen deutlich vergrößerten Luftdurchgangsquerschnitt auf. Im vorliegend dargestellten Ausführungsbeispiel ist der zwischen Spot-Lufteingangsöffnung 5 und Spot-Luftabgabeöffnung 4 befindliche Spot-Luftkanal 6 mit einem sich konstant verjüngenden Luftdurchgangsquerschnitt versehen. Dies kann auf einfache Weise dadurch realisiert werden, dass die Trennwand 9, welche den Spot-Luftkanal 6 vom Diffus-Luftkanal 8 trennt (und gleichzeitig die Außenwand des Spot-Luftkanals 6 bildet) konusartig ausgebildet ist. Vorzugsweise hat sich ein Verhältnis des Luftdurchgangsquerschnitts an der Spot-Luftabgabeöffnung 4 zur Spot-Lufteingangsöffnung 5 von 0,4 bis 0,95 als besonders geeignet erwiesen. Selbstverständlich sind auch beliebige Zwischenwerte möglich, wie insbesondere ein Verhältnis von 0,5, 0,6, 0,7, 0,8 oder 0,9.

Durch den vorgeschlagenen Aufbau ist es möglich, eine sehr große Spot-Lufteingangsöffnung 5 zur Verfügung zu stellen, was auch bei einem relativ niedrigen Druck der herangeführten Luftströmung A zu einem recht hohen Luftdurchfluss führt. Aufgrund des sich verjüngenden Querschnitts des Spot-Luftkanals 6 erhöht sich die Geschwindigkeit des Luftstroms A, so dass ein Spot-Luftstrahl mit einer hohen Geschwindigkeit von der Spot-Luftabgabeöffnung 4 freigesetzt wird. Eine solche Luftabgabecharakteristik ist erwünscht.

Um die Außenkontur 10 der Luftausströmerdüse 1 konstant halten zu können, erweitert sich der Luftdurchtrittsquerschnitt des Diffus-Luftkanals 8 korrespondierend zur Querschnittsverjüngung des Spot-Luftkanals 6, Es hat sich dabei gezeigt, dass die relativ kleine Diffus-Lufteingangsöffnung 7 keine Übermäßigen Nachteile zur Folge hat. Im Gegenteil bewirkt die Vergrößerung des Luftdurchgangsquerschnitts zwischen Diffus-Lufteingangsöffnung 7 und Diffus-Luftabgabeöffnung 3 eine zusätzliche Diffusion des Luftstroms.

Um den Luftdurchtritt durch den Spot-Luftkanal 6 und den Diffus-Luftkanal 8 (auch unabhängig voneinander) verstellen zu können, sind in den jeweiligen Luftkanälen, 6, 8 Verstellklappen 11a, 11b, 11c angeordnet, welche vorliegend nur schematisch angedeutet sind.

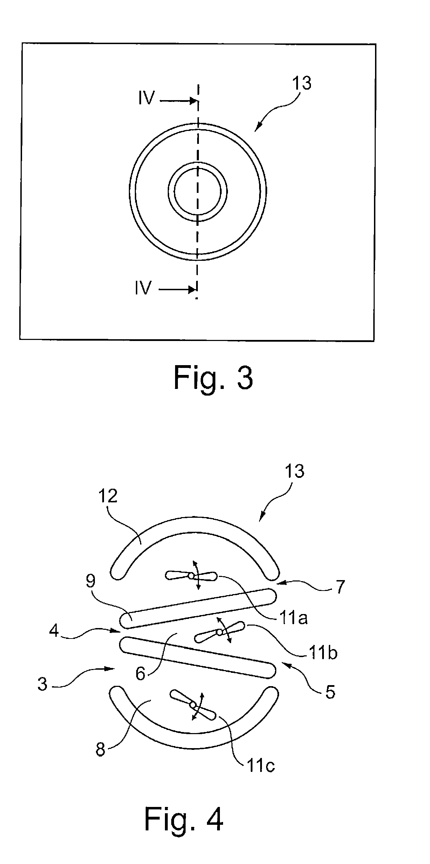

In den Fig. 3 und 4 ist ein zweites denkbares Ausführungsbeispiel einer Luftausströmerdüse 13 dargestellt. Die Luftausströmerdüse 13 weist einen zur in Fig. 1 und 2 dargestellten Luftausströmerdüse 1 weitgehend identischen Aufbau auf. Der wesentliche Unterschied zwischen den beiden Luftausströmerdüsen 1, 13 besteht in der Außenkontur 12 der Luftausströmerdüse 13. Dank der kugelartigen Außenkontur 12 ist es möglich, die Luftausströmerdüse 13 in ihrer Halterung zu verdrehen, so dass die Richtung des von der Luftausströmerdüse 13 abgegebenen gerichteten Luftstrahls auf einfache Weise in unterschiedliche Richtungen gelenkt werden kann.

### Bezugszeichenliste

- 1: Luftausströmerdüse
- 2: Luftausströmerdüsenanordnung
- 3: Diffus-Luftabgabeöffnung
- 4: Spot-Luftabgabeöffnung
- 5: Spot-Lufteingangsöffnung
- 6: Spot-Luftkanal
- 7: Diffus-Luftausgangsöffnung
- 8: Diffus-Luftkanal
- 9: Trennwand
- 10: Außenkontur
- 11: Verstellklappen
- 12: Außenkontur
- 13: Luftausströmerdüse

## Patentansprüche

1. Luftausströmvorrichtung (1, 13) für Belüftungsvorrichtungen, insbesondere für Belüftungsvorrichtungen von Kraftfahrzeugen, speziell Luftausströmerdüsen für Belüftungsvorrichtungen, insbesondere für Belüftungsvorrichtungen von Kraftfahrzeugen, **dadurch gekennzeichnet, dass** die Luftausströmvorrichtung (1, 13) zumindest abschnittsweise zumindest zwei voneinander getrennte Luftführungskanäle (6, 8) aufweist, wobei sich der Luftdurchgangsquerschnitt zumindest eines der Luftführungskanäle (6, 8) verändert.

2. Luftausströmvorrichtung (1, 13) nach Anspruch 1, **dadurch gekennzeichnet, dass** der Luftdurchgangsquerschnitt zumindest eines der Luftführungskanäle (6, 8) sich monoton verändert, bevorzugt sich streng monoton verändert.

3. Luftausströmvorrichtung (1, 13) nach Anspruch 1 oder 2, **dadurch gekennzeichnet, dass** sich der Luftdurchgangsquerschnitt zumindest eines der Luftführungskanäle (6, 8) vergrößert und sich der Luftdurchgangsquerschnitt zumindest eines der Luftführungskanäle (6, 8) verkleinert.

4. Luftausströmvorrichtung (1, 13) nach einem der vorangehenden Ansprüche, **dadurch gekennzeichnet, dass** der Gesamtluftdurchgangsquerschnitt der Luftausströmvorrichtung (1, 13) und/oder der Außenquerschnitt (10) der Luftausströmvorrichtung (1, 13) im Wesentlichen gleich ist.

5. Luftausströmvorrichtung (1, 13) nach einem der vorangehenden Ansprüche, **dadurch gekennzeichnet, dass** zumindest Teile der Luftführungskanäle (6, 8) zumindest bereichsweise koaxial ausgebildet und/oder angeordnet sind.

6. Luftausströmvorrichtung (1, 13) nach einem der vorangehenden Ansprüche, **dadurch gekennzeichnet, dass** zumindest Teile der Luftführungskanäle (6, 8) zumindest bereichsweise kreisartig, kreisringartig, kreissegmentartig und/oder kreisringssegmentartig ausgebildet sind.

7. Luftausströmvorrichtung (1, 13) nach einem der vorangehenden Ansprüche, **dadurch gekennzeichnet, dass** zumindest einer der Luftführungskanäle (8) mit einer diffus wirkenden Luftabgabeöffnung (3) verbunden ist und/oder zumindest einer der Luftführungskanäle (6) mit einer gerichteten Luftabgabeöffnung (4) verbunden ist.

8. Luftausströmvorrichtung (1, 13) nach einem der vorangehenden Ansprüche, **dadurch gekennzeichnet, dass** zumindest ein Luftführungskanal (8), der mit einer diffus wirkenden Luftabgabeöffnung (3) verbunden ist, zumindest bereichsweise in einem äußeren Bereich der Luftausströmvorrichtung (1, 13) angeordnet ist und/oder mit einem sich vergrößernden Luftdurchtrittsquerschnitt ausgebildet ist.

9. Luftausströmvorrichtung (1, 13) nach einem der vorangehenden Ansprüche, **dadurch gekennzeichnet, dass** zumindest ein Luftführungskanal (6), der mit einer gerichteten Luftabgabeöffnung (3) verbunden ist, zumindest bereichsweise in einem inneren Bereich der Luftausströmvorrichtung (1, 13) angeordnet ist und/oder mit einem sich verjüngenden Luftdurchtrittsquerschnitt ausgebildet ist.

10. Luftausströmvorrichtung (1, 13) nach einem der vorangehenden Ansprüche, **dadurch gekennzeichnet, dass** zumindest Teile der Luftführungskanäle (6, 8) zumindest bereichsweise verstellt werden können, insbesondere geöffnet (11), geschlossen (11) und/oder hinsichtlich Ihrer Ausströmungscharakteristik verändert werden können.

11. Luftaufbereitungsvorrichtung, insbesondere Luftaufarbeitungsvorrichtung für Kraftfahrzeuge, **gekennzeichnet durch** zumindest eine Luftausströmvorrichtung (1, 13) nach einem der Ansprüche 1 bis 10.

12. Luftführungsvorrichtung, insbesondere Luftführungsvorrichtung für Kraftfahrzeuge, **gekennzeichnet durch** zumindest eine Luftausströmvorrichtung (1, 13) ach einem der Ansprüche 1 bis 10.

## Claims

1. An air vent device (1, 13) for ventilation devices, in particular for ventilation devices of motor vehicles, specifically air vent nozzles for ventilation devices, in particular for ventilation devices of motor vehicles, at least some sections of the air vent device (1, 13) comprising at least two air guide ducts (6, 8) which are separated from each other, the air passage cross-section of at least one of the air guide ducts changing in the air flow direction, **characterized in that** the air passage cross-section of at least one of the air guide ducts (6, 8) increases and the air passage cross-section of at least one of the air guide ducts (6, 8) decreases, and wherein the total air passage cross-section of the air vent device (1, 13) and/or the outside cross-section (10) of the air vent device (1, 13) is substantially the same.

2. An air vent device (1, 13) according to any one of the preceding claims, **characterized in that** at least parts of the air guide ducts (6, 8) have a coaxial design and/or arrangement, at least in some regions.

3. An air vent device (1, 13) according to any one of the preceding claims, **characterized in that** at least parts of the air guide ducts (6, 8) have a circular, circular ring-like, circle segment-like and/or circular ring segment-like design.

4. An air vent device (1, 13) according to any one of the preceding claims, **characterized in that** at least one of the air guide ducts (8) is connected to a diffusely acting air delivery opening (3) and/or at least one of the air guide ducts (6) is connected to a directed air delivery opening (4).

5. An air vent device (1, 13) according to any one of the preceding claims, **characterized in that** at least one air guide duct (8), which is connected to a diffusely acting air delivery opening (3), is arranged at least in some regions in an outer region of the air vent device (1, 13) and/or has an increasing air passage cross-section.

6. An air vent device (1, 13) according to any one of the preceding claims, **characterized in that** at least one air guide duct (6), which is connected to a directed air delivery opening (3) is arranged at least in some regions in an inner region of the air vent device (1, 13) and/or has a tapering air passage cross-section.

7. An air vent device (1, 13) according to any one of the preceding claims, **characterized in that** at least parts of the air guide ducts 6, 8) can be adjusted at least in some regions, in particular opened (11), closed (11) and/or changed with regard to the vent characteristics thereof.

8. An air conditioning device, in particular an air conditioning device for motor vehicles, **characterized by** at least one air vent device (1, 13) according to any one of claims 1 to 7.

9. An air guide device, in particular an air guide device for motor vehicles, **characterized by** at least one air vent device (1, 13) according to any one of claims 1 to 7.

## Revendications

1. Dispositif de diffusion d'air (1, 13) pour des dispositifs de ventilation, en particulier pour des dispositifs de ventilation de véhicules automobiles, spécialement buses de diffusion d'air pour des dispositifs de ventilation, en particulier pour des dispositifs de ventilation de véhicules automobiles, où le dispositif de diffusion d'air (1, 13) présente, au moins partiellement, au moins deux conduits de guidage d'air (6, 8) séparés l'un de l'autre, où la section de passage de l'air d'au moins l'un des conduits de guidage d'air (6, 8) se modifie dans la direction d'écoulement de l'air,
**caractérisé en ce que** la section de passage de l'air d'au moins l'un des conduits de guidage d'air (6, 8) augmente, et la section de passage de l'air d'au moins l'un des conduits de guidage d'air (6, 8) diminue, et où la section totale de passage de l'air du dispositif de diffusion d'air (1, 13) et / ou la section extérieure (10) du dispositif de diffusion d'air (1, 13) est pratiquement identique.

2. Dispositif de diffusion d'air (1, 13) selon l'une ou l'autre des revendications précédentes, l'une ou l'autre des revendications précédentes, **caractérisé en ce qu'**au moins des parties des conduits de guidage d'air (6, 8) sont configurées est / ou disposées au moins partiellement de façon coaxiale.

3. Dispositif de diffusion d'air (1, 13) selon l'une ou l'autre des revendications précédentes, **caractérisé en ce qu'**au moins des parties des conduits de guidage d'air (6, 8) sont configurées au moins partiellement en forme de cercle, en forme d'anneau de cercle, en forme de segment de cercle et / ou en forme de segment d'anneau de cercle.

4. Dispositif de diffusion d'air (1, 13) selon l'une quelconque des revendications précédentes, **caractérisé en ce qu'**au moins l'un des conduits de guidage d'air (8) est relié à une ouverture de sortie d'air (3) fonctionnant à jet diffus, et / ou au moins l'un des conduits de guidage d'air (6) est relié à une ouverture de sortie d'air (4) à jet dirigé.

5. Dispositif de diffusion d'air (1, 13) selon l'une quelconque des revendications précédentes, **caractérisé en ce qu'**au moins un conduit de guidage d'air (8), qui est relié à une ouverture de sortie d'air (3) fonctionnant à jet diffus, est disposé au moins partiellement dans une zone extérieure du dispositif de diffusion d'air (1, 13), et / ou est configuré en ayant une section de passage de l'air augmentant.

6. Dispositif de diffusion d'air (1, 13) selon l'une quelconque des revendications précédentes, **caractérisé en ce qu'**au moins un conduit de guidage d'air (6), qui est relié à une ouverture de sortie d'air (3) à jet dirigé, est disposé au moins partiellement dans une zone intérieure du dispositif de diffusion d'air (1, 13), et / ou est configuré en ayant une section de passage de l'air diminuant.

7. Dispositif de diffusion d'air (1, 13) selon l'une quelconque des revendications précédentes, **caractérisé en ce qu'**au moins des parties des conduits de guidage d'air (6, 8) peuvent être ajustées au moins partiellement, en particulier ouvertes (11), fermées (11), et / ou peuvent être modifiées concernant leur caractéristique de diffusion d'air.

8. Dispositif de traitement de l'air, en particulier dispositif de régénération de l'air pour des véhicules automobiles, **caractérisé par** au moins un dispositifs de diffusion d'air (1, 13) selon l'une quelconque des revendications 1 à 7.

9. Dispositif de guidage d'air, en particulier dispositif de guidage d'air pour des véhicules automobiles, **caractérisé par** au moins un dispositif de diffusion d'air (1, 13) selon l'une quelconque des revendications 1 à 7.
